# EUROPEAN PATENT APPLICATION

(11) **EP 4 503 208 A1**
(43) Date of publication of application: **05.02.2025**
(21) Application number: 23780170.9
(22) Date of filing: 24.03.2023
(51) Int. Cl.: H01M 4/96, C04B 35/52, C04B 35/83, D01F 9/22, H01M 4/88, H01M 8/00, H01M 8/10

(54) **CARBON SHEET AS WELL AS GAS DIFFUSION ELECTRODE SUBSTRATE, MEMBRANE ELECTRODE ASSEMBLY, AND FUEL CELL USING SAME**

(30) Priority: 30.03.2022 JP 2022055777; 14.12.2022 JP 2022199158
(71) Applicant: Toray Industries, Inc., Tokyo 103-8666 (JP)
(72) Inventor: OTAKE, Hiroaki, Otsu-shi, Shiga 520-8558 (JP); UTSUNOMIYA, Masamichi, Otsu-shi, Shiga 520-8558 (JP); WATANABE, Fumitaka, Otsu-shi, Shiga 520-8558 (JP); SODE, Katsuya, Otsu-shi, Shiga 520-2141 (JP)
(74) Representative: Kador & Partner Part mbB
(86) International application number: PCT/JP2023/011823
(87) International publication number: WO 2023/190160

(57) **Abstract**

This carbon sheet includes at least a carbon fiber structure formed from carbon fibers, a binding agent, and graphite particles, wherein in a pore diameter distribution of the carbon sheet, the ratio of the volume of a second peak present in a region having a pore diameter of 0.5 µm to 3 µm to the volume of a first peak present in a region having a pore diameter of 20 µm to 100 µm is 0.06 to 0.50. A carbon sheet which suppresses dry-up and achieves both conductivity and retention of moisture is provided in order to exhibit high power generation performance in a solid polymer fuel cell.

## Description

### TECHNICAL FIELD

The present invention relates to a fuel cell, particularly a carbon sheet that is suitably used for an electrode of a solid polymer fuel cell, a gas diffusion electrode substrate using the same, and a membrane electrode assembly.

### BACKGROUND ART

An electrode used in a solid polymer fuel cell is sandwiched between two bipolar plates and disposed therebetween in the solid polymer fuel cell, and has a structure including an electrolyte membrane, catalyst layers formed on both surfaces of the electrolyte membrane, and gas diffusion electrode substrates formed outside the catalyst layers. As the performance required of the gas diffusion electrode substrate, for example, there are gas diffusivity, electrical conductivity for collecting electricity generated in the catalyst layer, drainage performance for efficiently removing moisture generated on the surface of the catalyst layer, and moisture retention performance for preventing drying of the electrolyte membrane. In addition, the fuel cell is a system in which energy generated at the time when hydrogen and oxygen react with each other to produce water is electrically extracted, and therefore when an electrical load increases, i.e., a current to be extracted outside the cell increases, a large amount of water (water vapor) is generated. When the water vapor condenses into water droplets at a low temperature to block the pores of the gas diffusion electrode substrates, the amount of gas (oxygen or hydrogen) supplied to the catalyst layer decreases. When all the pores are ultimately closed, power generation is stopped (this phenomenon is referred to as flooding).

The gas diffusion electrode substrate is required to have drainage performance so that occurrence of the flooding is inhibited. As means for improving the drainage performance, a carbon sheet formed of carbon fibers subjected to a water repellent treatment is usually used to improve the water repellency. When the water repellent carbon sheet subjected to a water repellent treatment as described above is used directly as a gas diffusion electrode substrate, condensation of water vapor leads to generation of large water droplets because the substrate has a coarse fiber, and thus flooding easily occurs. Thus, a coating liquid in which electrically conductive fine particles of carbon black etc. are dispersed may be applied, dried, and sintered to provide a layer called a microporous layer on a water repellent carbon sheet.

A fuel cell used as a power source of an automobile is required to have power generation performance under a high temperature condition exceeding 90°C. At high temperatures, an electrolyte membrane is likely to be dried, which lowers the ion conductivity of the electrolyte membrane and reduces the power generation performance (this phenomenon is called dry-up).

In Patent Document 1, in order to enhance the drainage performance of the gas diffusion electrode substrate, it is proposed to form through holes in a resin carbide for binding carbon fibers by using organic particles or organic fibers in addition to a normal water repellent treatment. By forming through holes in the binding portion, passages for water and gas are formed, and the drainage performance and the gas diffusibility are simultaneously enhanced.

In Patent Document 2, an organic polymer compound binder is mixed with a thermosetting resin as a binding agent, and the organic polymer binder disappears during heat treatment, whereby pores are formed around the thermosetting resin remaining as a resin carbide. By using the pores as paths, drainage performance and gas diffusibility are improved.

In Patent Document 3, by laminating a water management sheet with a controlled pore diameter on a substrate, both drainage performance and gas diffusibility are achieved even in an environment with a large amount of produced water.

### PRIOR ART DOCUMENT

### PATENT DOCUMENTS

Patent Document 1: Japanese Patent Laid-open Publication No. 2011-146373
Patent Document 2: Japanese Patent Laid-open Publication No. 2016-91996
Patent Document 3: Japanese Patent Laid-open Publication No. 2011-233274

### SUMMARY OF THE INVENTION

### PROBLEMS TO BE SOLVED BY THE INVENTION

The binding portion between carbon fibers is an electron transfer path of the gas diffusion electrode substrate and plays an important role in maintaining conductivity. In Patent Documents 1 and 2, since through holes or pores are formed in the binding portion, a conductive path is cut off, and conductivity is deteriorated. On the other hand, when the amounts of organic particles and organic fibers to be added are reduced in order to secure conductivity, through holes sufficient for drainage and gas diffusion cannot be formed. In addition, the through holes cannot form pores having a water retention function necessary for suppressing dry-up, and dry-up is likely to occur. In addition, in Patent Document 3, since only the pore diameter of the water management sheet on the substrate is controlled and the pores are formed using carbon black having a small particle diameter, a pore volume that exhibits a sufficient water retention function in suppressing dry-up cannot be secured.

### SOLUTIONS TO THE PROBLEMS

The present inventors have found a carbon sheet having both moisture retention and conductivity by forming pores with a binding agent and graphite particles. The present invention for solving the above-mentioned problems is as follows.

[1] A carbon sheet including at least a carbon fiber structure formed from carbon fibers, a binding agent, and graphite particles, in which
   in a pore diameter distribution of the carbon sheet, a ratio of a volume of a second peak present in a region of a pore diameter of 0.5 um or more and 3 um or less to a volume of a first peak present in a region of 20 um or more and 100 um or less is 0.06 to 0.50.
[2] The carbon sheet according to [1], in which the carbon fiber structure is a carbon fiber paper material.
[3] The carbon sheet according to [1] or [2], in which the graphite particles have an aspect ratio of 5 or more.
[4] The carbon sheet according to any one of [1] to [3], in which the graphite particles have an average particle size of 1 um or more and 20 um or less.
[5] The carbon sheet according to any one of [1] to [4], in which the graphite particles are vein graphite or scale-like graphite.
[6] The carbon sheet according to any one of [1] to [5], in which a mass of the graphite particles is 30 mass% or more and 50 mass% or less in a mass of the entire carbon sheet.
[7] The carbon sheet according to any one of [1] to [6], in which a mass of the graphite particles is 100 parts by mass or more and 300 parts by mass or less with respect to 100 parts by mass of the binding agent.
[8] The carbon sheet according to any one of claims [1] to [7], having a conductive resistance in a through-plane direction of 0.5 mΩ·cm² or more and 4.5 mΩ·cm² or less when pressurized at 1.0 MPa.
[9] The carbon sheet according to any one of [1] to [8], having a thermal resistance in a through-plane direction of 0.5 K·cm²/W or more and 3.3 K·cm²/W or less when pressurized at 1.0 MPa.
[10] A water repellent carbon sheet including the carbon sheet according to any one of [1] to [9] and further including a water repellent material.
[11] A gas diffusion electrode substrate including a microporous layer on one surface of the carbon sheet according to any one of [1] to [9] or the water repellent carbon sheet according to [10].
[12] A membrane electrode assembly including the carbon sheet according to any one of [1] to [9], the water repellent carbon sheet according to [10], or the gas diffusion electrode substrate according to [11] as a gas diffusion electrode, in which the gas diffusion electrode is bonded to at least one surface of a solid polymer electrolyte membrane provided with a catalyst layer on both surfaces.
[13] A membrane electrode assembly including the carbon sheet according to any one of [1] to [9], the water repellent carbon sheet according to [10], or the gas diffusion electrode substrate according to [11] as a cathode-side gas diffusion electrode, and a gas diffusion electrode having a higher thermal resistance than the cathode-side gas diffusion electrode on an anode side, in which the gas diffusion electrode is bonded to a solid polymer electrolyte membrane provided with a catalyst layer on both surfaces.
[14] A fuel cell including bipolar plates on both sides of the membrane electrode assembly according to [12] or [13].
[15] Transportation equipment using the fuel cell according to [14] as a power source.
[16] A method for producing a carbon sheet to produce the carbon sheet according to any one of [1] to [9], including impregnating a carbon fiber structure with a liquid composition containing a mixture of a thermosetting resin and a thermoplastic resin and the graphite particles.
[17] The method for producing a carbon sheet according to [16], including heat-treating the carbon fiber structure impregnated with the liquid composition containing the mixture of the thermosetting resin and the thermoplastic resin in an inert atmosphere at 1,300°C or more and 3,000°C or less.

### EFFECTS OF THE INVENTION

By using the carbon sheet of the present invention, it is possible to provide a fuel cell that can achieve both conductivity and moisture retention, hardly dries up, and exhibits high power generation performance.

### EMBODIMENTS OF THE INVENTION

### <Carbon Sheet>

The carbon sheet in the present invention is a porous structure having a sheet-like form by binding a carbon fiber structure (such as a carbon fiber paper material in a state of being only bonded with an organic polymer such as polyvinyl alcohol) with a binding agent and generally has an average pore size of 10 to 100 um. In the present invention, the carbon sheet subjected to the water repellent treatment is referred to as a "water repellent carbon sheet" as described later. In the present invention, since the carbon sheet or the water repellent carbon sheet is particularly suitably used as a gas diffusion electrode substrate of a solid polymer fuel cell, hereinafter, the effect in the case of using the carbon sheet as a gas diffusion electrode substrate may be described as the effect in the case where the carbon sheet takes a specific form.

Examples of the carbon fibers constituting the carbon sheet include polyacrylonitrile (PAN)-based, pitch-based, and rayon-based carbon fibers. Among them, PAN-based carbon fibers are preferably used because of their excellent mechanical strength.

Examples of a possible form of the carbon fiber structure include forms of carbon fiber paper materials, carbon fiber fabrics, and carbon fiber nonwoven fabrics. Among them, a carbon fiber paper material is preferable because a carbon fiber paper material is excellent in the property of absorbing a dimensional change of an electrolyte membrane in the through-plane direction of the electrolyte membrane, that is, the "springiness".

The carbon fibers constituting the carbon sheet preferably have an average diameter of monofilaments (hereinafter referred to as "carbon fiber diameter") within the range of 3 to 20 um, more preferably within the range of 5 to 12 um. When the carbon fiber diameter is 3 um or more, more preferably 5 um or more, the pore diameter becomes large, and the drainage performance is improved, so that flooding is easily suppressed. Meanwhile, when the carbon fiber diameter is 20 um or less, more preferably 12 um or less, thickness unevenness is reduced, so that the thickness of the carbon sheet is easily controlled to fall within a preferred range as described below. Here, the carbon fiber diameter is an average value determined by taking a photograph of the carbon fibers at a magnification of 1,000 times, under a microscope such as a scanning electron microscope, randomly selecting 30 different monofilaments, and measuring their diameters.

The carbon fibers constituting the carbon sheet preferably have an average length of monofilaments (hereinafter referred to as "carbon fiber length") within the range of 3 to 20 mm, more preferably within the range of 5 to 15 mm. When the carbon fiber length is 3 mm or more, more preferably 5 mm or more, the carbon sheet easily attains excellent mechanical strength, electrical conductivity, and thermal conductivity. Meanwhile, when the carbon fiber length is 20 mm or less, more preferably 15 mm or less, dispersibility of the carbon fibers in papermaking is improved, so that a uniform carbon sheet can be easily obtained. A carbon fiber having the above-mentioned carbon fiber length can be obtained by a method of cutting a continuous carbon fiber into a desired length, or the like. The carbon fiber length is determined by taking a photograph of the carbon fibers with a microscope such as a scanning electron microscope at a magnification of 50 times, selecting 30 different monofilaments randomly, measuring their lengths, and calculating the average of the lengths.

The carbon sheet preferably has a thickness of 50 to 230 um, more preferably 70 to 180 um. If the thickness of the carbon sheet is 230 um or less, more preferably 180 um or less, the gas diffusivity is easily enhanced, and produced water is easily discharged. Further, the size of a fuel cell as a whole is easily reduced. Meanwhile, when the thickness of the carbon sheet is 50 um or more, more preferably 70 um or more, gas diffusion in an in-plane direction in the carbon sheet is efficiently performed, and power generation performance is easily improved.

As the binding agent for binding the carbon fibers to each other, a resin or a carbide of a resin can be used, but a binding agent containing a carbide of a resin as a main component is preferable. As the resin, a thermosetting resin such as a phenol resin, an epoxy resin, a melamine resin, and a furan resin is preferable, and it is more preferable to add a thermoplastic resin such as an acrylic resin, a polyvinylidene chloride resin, and a polytetrafluoroethylene resin to the thermosetting resin. This is because, by adding the thermoplastic resin, the fluidity of the resin during molding is improved, and pores described later are easily formed.

Further, particles of graphite such as synthetic graphite, natural graphite, amorphous graphite, vein graphite, scale-like graphite, expandable graphite, spherical graphite, and flake graphite are contained in the carbon sheet for the purpose of improving the mechanical properties, conductivity, and thermal conductivity of the carbon sheet through mixing with the binding agent. Among them, scale-like graphite, vein graphite, expandable graphite, and flaky graphite are more preferable because they have a large aspect ratio, so that pores are easily formed by the graphite particles and the binding agent, and conductive paths are easily formed. The vein graphite is massive graphite having a relatively large flake thickness, and the scale-like graphite and the flaky graphite are thinner flaky graphite than the vein graphite. Expandable graphite refers to graphite in which the space between layers in a particle is expanded.

As characteristics of the shape of the graphite particles, the aspect ratio, which is major axis/minor axis of the particles, is preferably 5 or more, more preferably 5 or more and 7,000 or less, still more preferably 15 or more and 5,000 or less. When the aspect ratio is less than 5, a sufficient pore volume formed by the graphite particles and the binding agent to exhibit the water retention function may not be obtained. When the aspect ratio is 15 or more, a more preferable amount of pores are easily formed for exhibiting a water retention function. When the aspect ratio is 7,000 or less, more preferably 5,000 or less, the strength of the graphite particles is sufficient, so that the shape of the graphite particles is less likely to be destroyed during the process, and the graphite particles can function as conductive paths in the carbon sheet.

The aspect ratio can be measured by, for example, enlarging and observing the particles using a scanning electron microscope (SEM). In the resulting SEM photograph of the graphite particles, 100 graphite particles were arbitrarily selected. When a line segment of the longest part measured so as to maximize the length connecting outer ends of a graphite particle was defined as the particle size, and the length of the longest part among line segments orthogonal to the particle size was defined as the minor axis, the ratio of the particle size to the minor axis of the graphite particle was measured, and the average value thereof was calculated. The average particle size of the graphite particles is preferably 1 um or more and 20 um or less, more preferably 3 µm or more and 10 um or less. If the average particle diameter is smaller than 1 um, the pore volume formed by the graphite particles and the binding agent cannot be sufficiently obtained, and the moisture retention property may be deteriorated. On the other hand, if the average particle diameter is larger than 20 um, it is difficult to form conductive paths, so that the conductive resistance may increase. As for the average particle size, particles can be enlarged and observed using, for example, a scanning electron microscope (SEM) in the same manner as in the aspect ratio, 100 graphite particles are arbitrarily selected in the resulting SEM photograph of the graphite particles, the length measured so that the length connecting the outer ends is maximized is taken as the particle size of a graphite particle, and the average value thereof is calculated.

In the pore diameter distribution of the carbon sheet, the ratio of the volume of a second peak present in the region of 0.5 um or more and 3 um or less to the volume of a first peak present in a first region of 20 um or more and 100 um or less is 0.06 to 0.50, preferably 0.20 to 0.40. The first region is derived from pores formed by carbon fibers bound by the binding agent and serves as a main gas diffusion path and a discharge path of produced water. A second region is derived from pores formed by the binding agent and the graphite particles and plays a role of moisture retention of the electrolyte membrane by containing produced water during power generation. When the ratio of the volume of the second peak to the volume of the first peak is 0.06 or more, preferably 0.20 or more, the pore volume containing produced water is secured, and the moisture retention property of the carbon sheet is improved. When the ratio of the volume of the second peak to the volume of the first peak is 0.50 or less, preferably 0.40 or less, the gas diffusibility and the drainage performance of the carbon sheet are improved.

In the present invention, the conductive resistance in the through-plane direction is preferably 0.5 mΩ·cm² or more and 4.5 mΩ·cm² or less when the carbon sheet is pressurized at 1.0 MPa. The upper limit is preferably 4.5 mΩ·cm² or less, more preferably 4.0 mΩ·cm² or less. When the conductive resistance is 4.5 mΩ·cm² or less, the resistance overvoltage of the fuel cell can be reduced, and the power generation performance is improved. In order to reduce the conductive resistance, for example, adjustment can be performed by using graphite particles having a large aspect ratio or increasing the ratio of graphite particles in the carbon sheet. The lower limit of the conductive resistance in the through-plane direction when the carbon sheet is pressurized at 1.0 MPa is not particularly limited, but practically, it is not easy to set the conductive resistance to less than 0.5 mΩ·cm² at the time of pressurization at 1.0 MPa, and thus the lower limit is 0.5 mΩ·cm² at the time of pressurization at 1.0 MPa.

The thermal resistance in a through-plane direction is preferably 0.5 K·cm²/W or more and 3.3 K·cm²/W or less when the carbon sheet is pressurized at 1.0 MPa. The upper limit is preferably 3.3 K·cm²/W or less, more preferably 3.0 K·cm²/W or less. When the thermal resistance is 3.3 K·cm²/W or less, heat generated by the power generation reaction in the fuel cell is easily released through the carbon sheet, the temperature rise of the electrolyte membrane can be suppressed, and the relative humidity is easily increased. Therefore, under high temperature conditions, dry-up due to drying of the electrolyte membrane is suppressed, and power generation performance is improved. In order to reduce the thermal resistance, as in the case of the conductive resistance, for example, adjustment can be performed by using graphite particles having a large aspect ratio or increasing the ratio of graphite particles in the carbon sheet. The lower limit of the thermal resistance in the through-plane direction when the carbon sheet is pressurized at 1.0 MPa is not particularly limited, but practically, it is not easy to set the thermal resistance to less than 0.5 K·cm²/W at the time of pressurization at 1.0 MPa, and thus the lower limit is 0.5 K·cm²/W at the time of pressurization at 1.0 MPa.

The gas diffusion electrode substrate is required to have drainage performance so that occurrence of the flooding is inhibited. The water repellency can be enhanced by performing a water repellent treatment, and it is preferable that a water repellent material be attached to the carbon fibers, the binding agent, and the graphite particles in the carbon sheet. As the water repellent material, a fluoropolymer is preferably used. One or two or more resins selected from polytetrafluoroethylene (PTFE), an ethylene tetrafluoride-propylene hexafluoride copolymer (FEP), a perfluoroalkoxy fluoropolymer (PFA), an ethylene tetrafluoroethylene copolymer (ETFE), polyvinylidene fluoride (PVDF), and polyvinyl fluoride (PVF) can be used, and among these resins, PTFE or FEP that exhibits strong water repellency is more preferable as the water repellent material.

### <Method for Producing Carbon Sheet>

A method for producing the carbon sheet of the present invention includes at least an impregnation step of attaching a binding agent and graphite particles to a carbon fiber structure. It is preferable to include a molding step of controlling the thickness of the carbon fiber structure by hot pressing, a carbonization step of carbonizing the binding agent by a heat treatment, and a water repellent step of attaching a water repellent material to the carbonized carbon sheet.

### [Impregnation Step]

The method for producing the carbon sheet of the present invention includes a step of forming carbon fibers into a carbon fiber structure having a certain shape such as a paper material and then impregnating the carbon fiber structure with a liquid composition containing a binding agent and graphite particles.

When the liquid composition is prepared, a resin and graphite particles are added to a solvent, and then strong shearing is applied to the mixture, so that dispersibility of the graphite particles is improved, and the graphite particles can be uniformly attached to the carbon sheet. Examples of the method of applying strong shearing include a method in which a homogenizer is used for stirring for 10 minutes or more at a rotation speed of 3,000 rpm or more.

Examples of the method for impregnating the liquid composition include a method of dipping into a liquid composition in which a solvent is added to a resin and graphite particles, and a method of coating with the liquid composition. Among them, a method of dipping into a liquid composition is particularly preferably employed because of its excellent productivity.

When impregnation with the liquid composition is performed, impregnation is preferably performed such that the amount of the graphite particles is preferably 30 to 50 mass%, more preferably 40 to 50 mass%, with respect to the carbon sheet. When the content of the graphite particles is 30 mass% or more, more preferably 40 mass% or more with respect to the carbon sheet, the conductivity of the carbon sheet can be significantly improved. When the content of the graphite particles is 50 mass% or less with respect to the carbon sheet, the volume of the pore diameter having a peak in the first region can be sufficiently secured, and high drainage performance and gas diffusibility are obtained. When the carbonization step described later is performed after the impregnation step, the carbon sheet after the carbonization step preferably satisfies the above range.

The graphite particles are impregnated in an amount of preferably 100 to 300 parts by mass, more preferably 250 to 300 parts by mass with respect to 100 parts by mass of the binding agent. When the amount of the graphite particles is preferably 100 parts by mass or more, more preferably 250 parts by mass or more with respect to 100 parts by mass of the binding agent, the volume of the pores formed by the binding agent and the graphite particles increases, and the space in which water can be retained expands, so that the moisture retention property is improved. When the amount of the graphite particles is 300 parts by mass or less with respect to 100 parts by mass of the binding agent, the graphite particles are bound by the binding agent, the graphite particles are less likely to fall off even during power generation, and durability as a gas diffusion electrode substrate is improved. When the carbonization step described later is performed after the impregnation step, the graphite particles and the binding agent (carbonized resin) in the carbon sheet after the carbonization step preferably satisfy the above range.

### [Molding Step]

It is also preferable that the carbon fiber structure impregnated with the binding agent and the graphite particles as described above be molded by heating and pressurizing before the heat treatment step described later. By this molding step, the thickness and porosity of the resulting carbon sheet can be more accurately controlled. In the molding step, the heating temperature is preferably 100 to 250°C, and the applied pressure is preferably 0.01 to 5 MPa.

### [Carbonization Step]

In order to carbonize the binding agent contained in the carbon sheet after the molding step, it is preferable to perform baking in an inert atmosphere. The inert atmosphere can be obtained by allowing an inert gas such as nitrogen gas and argon gas to flow in the furnace. The highest temperature in the baking is preferably within the range of 1,300 to 3,000°C, more preferably within the range of 1,500 to 3,000°C, further preferably within the range of 1,900 to 3,000°C. When the highest temperature is 1,300°C or more, carbonization of the binding agent is facilitated, so that the carbon sheet attains excellent electrical conductivity and thermal conductivity. Meanwhile, when the highest temperature is 3,000°C or less, the operating cost of the heating furnace is reduced.

### [Water Repellent Step]

Next, the carbon sheet obtained as described above is preferably subjected to a water repellent treatment using a water repellent treatment liquid in which a water repellent material containing a fluoropolymer is dispersed to obtain a water repellent carbon sheet.

Examples of the method of the water repellent treatment include a method in which the carbon sheet is dipped in the water repellent treatment liquid and a method in which the carbon sheet is coated with the water repellent treatment liquid by die coating or the like. The method in which the carbon sheet is dipped in the water repellent treatment liquid is preferable from the viewpoint of distributing the fluoropolymer uniformly in the through-plane direction in the carbon sheet. After the water repellent treatment, it is preferable to perform a step of heating and drying or a step of sintering.

### <Gas Diffusion Electrode Substrate>

The carbon sheet or the water repellent carbon sheet described above can be used as a gas diffusion electrode substrate, but it is more preferable that a microporous layer be formed on one surface of the carbon sheet or the water repellent carbon sheet and that the product be used as a gas diffusion electrode substrate. The microporous layer is a porous layer containing a carbon powder and a water repellent material and usually having an average pore size of 0.01 µm to 1 µm. The average pore size of the microporous layer is determined by measuring a powder obtained by scraping off a surface on which the microporous layer is formed from the gas diffusion electrode substrate with a spatula or the like by a mercury intrusion method, and calculating the average pore size from the following formula using the obtained specific surface area and total pore volume. (Average pore size) = 4 × (total pore volume)/(specific surface area).

Examples of the carbon powder contained in the microporous layer include carbon blacks such as furnace black, acetylene black, lamp black, and thermal black, graphite particles such as scale-like graphite, vein graphite, amorphous graphite, synthetic graphite, expandable graphite, and flake graphite, carbon nanotubes, and carbon nanofibers. Among them, carbon black is preferably used.

As the water repellent material included in the microporous layer, a fluoropolymer such as a polytetrafluoroethylene (PTFE), a tetrafluoroethylene-hexafluoropropylene copolymer (FEP), and a tetrafluoroethylene-perfluoroalkyl vinyl ether copolymer (PFA) is preferably used.

The areal weight of the microporous layer is not particularly limited but is preferably within the range of 10 to 50 g/m², more preferably 14 to 30 g/m². If the areal weight of the microporous layer is 10 g/m² or more, more preferably 14 g/m² or more, one surface of the carbon sheet can be covered with the microporous layer, and reverse diffusion of produced water is further promoted, so that drying of the electrolyte membrane can be further suppressed. If the areal weight of the microporous layer is 50 g/m² or less, more preferably 30 g/m² or less, the drainage performance is further improved, so that flooding can be further suppressed.

The microporous layer is obtained by applying a coating liquid containing the above-described carbon powder and water repellent material onto the carbon sheet. For the coating, a coating system such as screen printing, rotary screen printing, spraying, intaglio printing, gravure printing, die coating, bar coating, and blade coating can be employed. Then, preferably thereafter, drying is performed at a temperature of 80 to 180°C. Further, after drying, it is preferable to melt the water repellent material by heating at a temperature of about 300 to 400°C, more preferably 340 to 390°C.

### [Membrane Electrode Assembly]

In the present invention, a membrane electrode assembly can be formed by bonding the above-described gas diffusion electrode substrate to at least one surface of a solid polymer electrolyte membrane having a catalyst layer on both surfaces. In the case where a gas diffusion electrode provided with the microporous layer is used, the microporous layer of the gas diffusion electrode substrate is preferably arranged on the catalyst layer side because reverse diffusion of the produced water is more likely to occur, and also the contact area between the catalyst layer and the gas diffusion electrode substrate is increased, so that the contact electrical resistance can be reduced.

### [Fuel Cell]

The fuel cell of the present invention includes the gas diffusion electrode substrate of the present invention. That is, bipolar plates are provided on both sides of the membrane electrode assembly described above. That is, the fuel cell is constituted by arranging bipolar plates on both sides of the membrane electrode assembly described above. Usually, a solid polymer fuel cell is constituted by laminating a plurality of such membrane electrode assemblies that are sandwiched by bipolar plates from both sides via a gasket. The catalyst layer is composed of a layer containing a solid polymer electrolyte and a carbon material of a carbon-supported catalyst. As the catalyst, platinum is usually used. As the solid polymer electrolyte, it is preferred to use a perfluorosulfonic acid-based polymer material having high protonic conductivity, oxidation resistance, and heat resistance. The constitutions themselves of the above-mentioned fuel cell unit and fuel cell are well known.

The fuel cell of the present invention can be used as a power source for transportation equipment such as automobiles, ships, and railways.

In particular, in the case of being used as a power source of an automobile, use in a high-temperature condition is required. An operating temperature of a current fuel cell mounted on an automobile is usually 60 to 70°C, but a large radiator is used to dissipate heat generated by power generation. Since a radiator required for exhaust heat can be downsized by increasing an operation temperature to about 90°C, development of a fuel cell having an increased operation temperature has been actively promoted. In order to operate the fuel cell at a high temperature, it is necessary to prevent drying of the electrolyte, and thus the carbon sheet having enhanced moisture retention property of the present invention is preferably used. In addition, in order to prevent a decrease in proton conductivity due to drying of the electrolyte membrane, it is preferable that the temperature distribution in the electrolyte membrane be made close to constant. Since heat generation due to the chemical reaction mainly occurs in the catalyst layer on the cathode side, the cathode side in the electrolyte membrane has a higher temperature, and a temperature gradient is formed in the electrolyte membrane. Therefore, by making the thermal resistance of the gas diffusion electrode substrate on the anode side higher than that of the gas diffusion electrode substrate on the cathode side, the exhaust heat from the anode side is reduced, and by making the temperature distribution in the electrolyte membrane close to constant, the reduction in the proton conductivity of the electrolyte membrane is suppressed, and by reducing the cell resistance, the power generation performance is improved. Preferably, the carbon sheet of the present invention is used as a cathode-side gas diffusion electrode substrate because of its low thermal resistance, and a carbon sheet having a thermal resistance higher than that of the carbon sheet of the present invention is used as an anode-side gas diffusion electrode substrate.

### EXAMPLES

The carbon sheet of the present invention will now be specifically described by way of examples. The materials, the method for producing and evaluating a carbon sheet, and the battery performance evaluation method of a fuel cell that are used in the examples are described below.

### <Average Particle Size and Aspect Ratio of Graphite Particles>

The carbon sheet was cut into 6 mm square to prepare 5 measurement samples, graphite particles contained in each sample were observed using a scanning electron microscope (SEM), 100 graphite particles were arbitrarily selected in the resulting SEM photograph of the graphite particles, the length measured so that the length connecting the outer ends was maximized was taken as the particle size of a graphite particle, and the average value of the 5 samples was calculated. Similarly, with respect to the aspect ratio of the graphite particles, when the length of the longest part of the line segment orthogonal to the particle size was defined as the minor axis, the ratio of the particle size to the minor axis of arbitrarily selected 100 graphite particles was measured, and the average value of 5 samples was calculated.

### <Pore Diameter Distribution>

Five measurement samples obtained by cutting the carbon sheet into 6 cm² were prepared, and the peak diameter was determined from the average value of the pore diameter distributions obtained by measuring the respective samples at a measurement pressure in the range of 6 kPa to 123 MPa (pore diameter: 10 nm to 200 um) by a mercury intrusion method. The gas diffusion electrode substrate having a microporous layer is heated at 500°C for 1 hour in an air atmosphere to burn-out the fluoropolymer in the microporous layer, and a carbon powder such as carbon black is scraped off with a spatula or the like before measurement. AutoPore 9520 manufactured by Shimadzu Corporation was used as a measuring apparatus. As for the peak of the pore diameter, a maximal point in a target region was defined as a peak of the region in a curve of a log differentiation graph of the pore volume distribution obtained by pore measurement with a mercury porosimeter, and that position was defined as the pore diameter.

In addition, the peak volume of the pores was determined by subtracting the integrated data at a small pore diameter from the value of the integrated volume at a large pore diameter in the pore diameter of the measurement target in the integrated data obtained by integrating the log differentiation graph of the pore volume distribution with respect to the pore diameter. For example, the peak volume in the second region (region of 0.5 um or more and 3 um or less) was determined by subtracting the integrated data of less than 0.5 um from the integrated data of less than 3 um.

By the above method, the volume of the first peak present in the region of pore diameters of 20 um or more and 100 um or less, the volume of the second peak present in the region of pore diameters of 0.5 um or more and 3 um or less, and the ratio thereof were measured.

### <Areal Weight of Carbon Sheet>

As for the carbon sheet, 10 test pieces each having a size of 10 cm × 10 cm were produced, the masses of the test pieces were individually measured, and the average areal weight of the 10 test pieces was determined.

### <Thickness and Density of Carbon Sheet>

The thickness of the carbon sheet was measured using a digital thickness meter "DIGIMICRO" manufactured by Nikon Corporation as the difference in height between the case where there was a measurement object and the case where there was no measurement object in a state where the carbon sheet was placed on a smooth surface plate and a load was applied so that the pressure was 0.15 MPa. Samples were taken at 10 different positions in the carbon sheet, measured values of the difference in height were averaged, and the average thus obtained was defined as a thickness. In addition, the density was calculated from the thickness of the carbon sheet and the areal weight of the carbon sheet.

### <Conductive Resistance>

The carbon sheet was cut into 30 mm × 30 mm to prepare 10 test pieces, each test piece was sandwiched between two gold-plated plates, a uniform surface pressure of 1.0 MPa was applied, a current of 1.0 A was applied, and the resistance after 1 minute was measured. The resistance multiplied by the area of the carbon sheet was defined as the conductive resistance in the through-plane direction of the carbon sheet, and the average value of 10 test pieces was determined.

### <Thermal Resistance>

The carbon sheet was cut into a circle with a diameter of 30 mm to prepare 10 test pieces, and each test piece was set in a thermal conductivity measuring apparatus (IE-1230 (manufactured by Iwatsu Test Instruments Co., Ltd.), pressurized at 1.0 MPa, and measured for the thermal resistance after 8 minutes. The resistance multiplied by the area of the carbon sheet was defined as the thermal resistance in the through-plane direction of the carbon sheet, and the average value of 10 test pieces was determined.

### <Gas Diffusibility>

With a gas/water vapor permeability measuring apparatus (MVDP-200C) manufactured by Seika Corporation, a gas for which diffusibility is to be measured is fed to one surface side (primary side) of the carbon sheet, and a nitrogen gas is fed to the other surface side (secondary side). Control was performed so that a pressure difference between the primary side and the secondary side was in the vicinity of 0 Pa (0 ± 3 Pa) (i.e. a state where the pressure difference hardly caused a gas flow, and only molecular diffusion caused a gas movement phenomenon), a gas concentration at the time of reaching equilibrium was measured with a gas concentration meter on the secondary side, and the value of the gas concentration (%) was defined as an index of gas diffusibility in the thickness direction. The carbon sheet was cut into 11 mm × 27 mm to prepare 10 test pieces, and the gas diffusibility of each test piece was measured to obtain an average value of 10 test pieces.

### <Power Generation Performance of Solid Polymer Fuel Cell>

A catalyst paste was prepared by sequentially adding 1.00 g of platinum-supported carbon (manufactured by Tanaka Kikinzoku Kogyo K.K., platinum supporting amount: 50 mass%), 1.00 g of purified water, 8.00 g of "Nafion (registered trademark)" solution (manufactured by Aldrich, "Nafion (registered trademark)", 5.0 mass%), and 18.00 g of isopropyl alcohol (manufactured by NACALAI TESQUE, INC.).

Then, a "NAFLON (registered trademark)" PTFE tape "TOMBO (registered trademark)" No. 9001 (manufactured by NICHIAS Corporation) that was cut into a size of 5 cm × 5 cm was coated with the obtained catalyst paste using a spray and dried at ordinary temperature to prepare a PTFE sheet equipped with a catalyst layer having a platinum amount of 0.3 mg/cm². Subsequently, a solid polymer electrolyte membrane "Nafion (registered trademark)" NRE-211CS (manufactured by DuPont) cut into 8 cm × 8 cm was sandwiched between 2 PTFE sheets with a catalyst layer, the resulting product was pressed at a temperature of 130°C for 5 minutes while pressurized at 5 MPa with a flat press machine, and thus the catalyst layers were transferred onto the solid polymer electrolyte membrane. After pressing, the PTFE sheets were removed to prepare a catalyst layer-equipped solid polymer electrolyte membrane.

Next, the solid polymer electrolyte membrane with catalyst layers was sandwiched between 2 pieces cut into 5 cm × 5 cm of the gas diffusion electrode substrate prepared in each of the examples and comparative examples, the resulting product was pressed at a temperature of 130°C for 5 minutes while pressurized at 3 MPa with a flat press machine, and thus a membrane electrode assembly was prepared.

The obtained membrane electrode assembly was incorporated into a single cell for fuel cell evaluation. Here, as a bipolar plate, a serpentine-type bipolar plate having one flow channel of 1.0 mm in each of channel width, channel depth, and rib width was used. Further, non-pressurized hydrogen and non-pressurized air was supplied to the anode side and the cathode side, respectively.

Measurements were performed as follows. Both the hydrogen and the air were humidified to a humidity of 100% using a humidification pot whose temperature was set to 52°C. The utilization rates of the hydrogen and oxygen in the air were set to 70 mol% and 40 mol%, respectively, and the temperature of the cell was set to 80°C. Under the above conditions, the output voltage at a current density of 1.9 A/cm² was measured and used as an index of the anti-dry-up characteristic.

### [Example 1]

### <Preparation of Carbon Sheet>

Polyacrylonitrile-based carbon fiber "TORAYCA" (registered trademark) T300 (average diameter of monofilaments: 7 um) manufactured by Toray Industries, Inc. was cut at a short fiber average length of 12 mm and dispersed in water to continuously make a paper by a wet papermaking method. Further, the paper was coated with a 10-mass% aqueous solution of polyvinyl alcohol as a binder and dried to prepare a carbon fiber paper material. The coating amount of the polyvinyl alcohol was 22 parts by mass with respect to 100 parts by mass of the carbon fiber paper material.

Next, using a resin composition obtained by mixing a resol type phenolic resin, which is a thermosetting resin, and a novolak type phenolic resin, which is a thermoplastic resin, at a mass ratio of 1 : 1, scale-like graphite (average particle size 5 um) as graphite particles, and methanol as a solvent, the materials were mixed at a ratio of resin composition/graphite particles/solvent = 13 mass%/12 mass%/75 mass%, and the resulting mixture was stirred for 1 minute using an ultrasonic dispersion apparatus to obtain a uniformly dispersed liquid composition.

Next, the carbon fiber paper material was dipped into an impregnation liquid of the liquid composition filled into a tray, sandwiched between rolls, and squeezed to impregnate the liquid composition. Thereafter, the product was heated and dried at a temperature of 100°C for 5 minutes. Next, a heating and pressurizing treatment was performed at a temperature of 180°C for 5 minutes with a heating and pressurizing device including upper and lower heating plates parallel to each other. At this time, a spacer was disposed between the upper and lower heating plates to adjust the space between the upper and lower heating plates so that the product after the heating and pressurizing treatment had a thickness of 160 um.

The heat-treated substrate was introduced into a heating furnace having a highest temperature of 2,400°C, in which a nitrogen gas atmosphere was maintained, to obtain a carbon sheet. The areal weight of the binding agent after the heat treatment was calculated by measuring in advance the mass reduction rate when only the binding agent was subjected to the heat treatment under the same conditions and multiplying the mass of the binding agent attached to the carbon fiber paper material before the heat treatment by the mass reduction rate. For graphite particles, the mass is not reduced by the heat treatment. The carbon sheet after the heat treatment had an areal weight of 40.0 g/m², a binding agent areal weight of 6.1 g/m², and a graphite particle areal weight of 17.4 g/m².

As a result of measurement as described in <Pore Diameter Distribution> above, the volume of the first peak, the volume of the second peak, and the ratio thereof were as shown in Table 1.

The carbon sheet prepared above was dipped in an aqueous dispersion liquid of a FEP resin ("NEOFLON (registered trademark)" FEP Dispersion ND-110 (manufactured by Daikin Industries, Ltd.)) to impregnate the carbon sheet with a water repellent material. Thereafter, the carbon sheet was heated and dried in a drying furnace at a temperature of 100°C for 5 minutes to prepare a water repellent carbon sheet. The water dispersion liquid of the water repellent material was diluted to an appropriate concentration such that the amount of the water repellent material was 5 parts by mass with respect to 95 parts by mass of the water repellent carbon sheet after drying by heating.

### <Preparation of Gas Diffusion Electrode Substrate>

A coating solution was prepared by mixing a carbon powder: acetylene black: "DENKA BLACK" (registered trademark) (manufactured by Denki Kagaku Kogyo K.K.), a water repellent material: a PTFE resin ("POLYFLON" (registered trademark) PTFE dispersion D-201C (manufactured by DAIKIN INDUSTRIES, LTD.), which was an aqueous dispersion liquid containing 60 mass% of a PTFE resin), 14.0 g of a surfactant "TRITON" (registered trademark) X-100 (manufactured by NACALAI TESQUE, INC.), and purified water using a disperser such that carbon powder/PTFE resin/surfactant/purified water = 7.0 mass%/2.5 mass%/14.1 mass%/76.4 mass%. One surface of the water repellent carbon sheet prepared in <Preparation of Carbon Sheet> above was coated with the coating solution in a planar form using a slit die coater, and heating was then performed at a temperature of 120°C for 10 minutes, and then at a temperature of 380°C for 10 minutes. In this way, a microporous layer was formed on the water repellent carbon sheet, so that a gas diffusion electrode substrate was prepared.

Table 1 shows the results of measurement according to <Gas Diffusibility>, <Conductive Resistance>, <Thermal Resistance>, and <Power Generation Performance of Solid Polymer Fuel Cell> above.

### [Example 2]

A carbon sheet was prepared in the same manner as in Example 1 except that a carbon fiber paper material having a different carbon fiber areal weight was prepared. After the heat treatment, the carbon sheet areal weight was 38.8 g/m², the binding agent areal weight was 6.7 g/m², and the graphite particle areal weight was 18.4 g/m².

### [Example 3]

A carbon sheet was prepared in the same manner as in Example 1 except that a carbon fiber paper material having a different carbon fiber areal weight was prepared. After the heat treatment, the carbon sheet areal weight was 42.8 g/m², the binding agent areal weight was 6.1 g/m², and the graphite particle areal weight was 17.4 g/m².

### [Example 4]

A carbon sheet was prepared in the same manner as in Example 1 except that a carbon fiber paper material having a different carbon fiber areal weight was prepared. After the heat treatment, the carbon sheet areal weight was 47.3 g/m², the binding agent areal weight was 6.1 g/m², and the graphite particle areal weight was 17.4 g/m².

### [Example 5]

A carbon sheet was prepared in the same manner as in Example 1 except that a carbon fiber paper material having a different carbon fiber areal weight was prepared and that a liquid composition in which the ratio between the resin composition and graphite was changed was used. After the heat treatment, the carbon sheet areal weight was 55.5 g/m², the binding agent areal weight was 12.2 g/m², and the graphite particle areal weight was 27.3 g/m².

### [Comparative Example 1]

A carbon sheet was prepared in the same manner as in Example 1 except that the carbon fiber paper material was dipped in a liquid composition obtained by mixing the resin composition, the graphite particles, and the solvent at a mixing ratio of 35 mass%/3 mass%/62 mass%. After the heat treatment, the carbon sheet areal weight was 39.3 g/m², the binding agent areal weight was 12.5 g/m², and the graphite particle areal weight was 3.3 g/m².

### [Comparative Example 2]

A carbon sheet was prepared in the same manner as in Example 1 except that spherical graphite particles (average particle size: 12 um, aspect ratio: 4) were used as the graphite particles. After the heat treatment, the carbon sheet areal weight was 40.0 g/m², the binding agent areal weight was 6.3 g/m², and the graphite particle areal weight was 17.1 g/m².

### [Comparative Example 3]

A carbon sheet was prepared in the same manner as in Example 1 except for using acetylene black (AB): "DENKA BLACK" in place of the graphite particles. After the heat treatment, the carbon sheet areal weight was 39.0 g/m², the binding agent areal weight was 6.3 g/m², and the acetylene black areal weight was 16.2 g/m².

### [Example 6]

A membrane electrode assembly in which the carbon sheet described in Example 1 was used as a cathode-side gas diffusion electrode substrate and the carbon sheet described in Comparative Example 1 was used as an anode-side gas diffusion electrode substrate was prepared, and the power generation performance was measured. As a result, the output voltage at a current density of 1.9 A/cm² was 0.52 V, which was better than that in Example 1 in which a gas diffusion electrode substrate having low thermal resistance was used for both electrodes.

### [Comparative Example 4]

A carbon sheet was prepared in the same manner as in Example 1 except that a carbon fiber paper material having a different areal weight of carbon fibers was prepared and that the carbon fiber paper material was dipped in a liquid composition obtained by mixing the resin composition, the graphite particles, and the solvent at a mixing ratio of 26 mass%/24 mass%/50 mass%. After the heat treatment, the carbon sheet areal weight was 60.2 g/m², the binding agent areal weight was 13.4 g/m², and the graphite particle areal weight was 36.8 g/m².

**[Table 1-1]**

| | | Unit | Example 1 | Example 2 | Example 3 | Example 4 | Example 5 |
|---|---|---|---|---|---|---|---|
| Configuration of carbon sheet | Carbon sheet areal weight | g/m² | 40.0 | 38.8 | 42.8 | 47.3 | 55.5 |
| | Type of graphite particles | - | Scale-like graphite | Scale-like graphite | Scale-like graphite | Scale-like graphite | Scale-like graphite |
| | Average particle size of graphite particles | µm | 5 | 5 | 5 | 5 | 5 |
| | Aspect ratio of graphite particles | - | 15 | 15 | 15 | 15 | 15 |
| | Volume of first peak | mL/g | 44.3 | 37.6 | 50.1 | 50. 4 | 63.3 |
| | Volume of second peak | mL/g | 9.5 | 10.0 | 0.2 | 6.1 | 5.1 |
| | Ratio of volume of second peak to volume of first peak | - | 0.21 | 0.27 | 0.16 | 0.10 | 0.08 |
| | Mass of graphite particles in mass of entire carbon sheet | mass% | 44 | 47 | 41 | 37 | 49 |
| | Mass of graphite particles with respect to mass of binding agent | mass% | 285 | 275 | 285 | 285 | 224 |
| | Thickness of carbon sheet | µm | 138 | 136 | 140 | 153 | 210 |
| | Density of carbon sheet | g/cm³ | 0.29 | 0.29 | 0.31 | 0.31 | 0.26 |
| Evaluation results | Gas diffusibility | % | 32.4 | 31.1 | 32.3 | 32.1 | 31.4 |
| | Conductive resistance | mΩ · cm² | 4.0 | 3.8 | 4.2 | 4 . 7 | 4.9 |
| | Thermal resistance | K · cm²/W | 3.0 | 2.8 | 3.2 | 3.8 | 3.4 |
| | Power generation performance | V | 0.42 | 0.49 | 0.40 | 0.30 | 0.36 |

**[Table 1-2]**

| | | Unit | Comparative Example 1 | Comparative Example 2 | Comparative Example 3 | Comparative Example 4 |
|---|---|---|---|---|---|---|
| Configuration of carbon sheet | Carbon sheet areal weight | g/m² | 39.3 | 40.0 | 39.0 | 60.2 |
| | Type of graphite particles | - | Scale-like graphite | Spherical graphite | AB | Scale-like graphite |
| | Average particle size of graphite particles | µm | 5 | 12 | - | 5 |
| | Aspect ratio of graphite particles | - | 15 | 4 | - | 15 |
| | Volume of first peak | mL/g | 57.4 | 40.1 | 46.2 | 27.4 |
| | Volume of second peak | mL/g | 0.8 | 0.8 | 0.2 | 15 |
| | Ratio of volume of second peak to volume of first peak | - | 0.01 | 0.02 | 0.00 | 0.55 |
| | Mass of graphite particles in mass of entire carbon sheet | mass% | 8 | 43 | 42 | 61 |
| | Mass of graphite particles with respect to mass of binding agent | mass% | 26 | 271 | 257 | 275 |
| | Thickness of carbon sheet | µm | 139 | 135 | 142 | 145 |
| | Density of carbon sheet | g/cm³ | 0.20 | 0.30 | 0.27 | 0.42 |
| Evaluation results | Gas diffusibility | % | 33.1 | 31.9 | 32.9 | 30.5 |
| | Conductive resistance | mΩ · cm² | 7.1 | 4.3 | 0.3 | 3.9 |
| | Thermal resistance | K · cm²/W | 8.2 | 3.3 | 10.4 | 2.3 |
| | Power generation performance | V | 0.34 | 0.33 | 0.29 | 0.28 |

## Claims

1. A carbon sheet comprising at least a carbon fiber structure formed from carbon fibers, a binding agent, and graphite particles, wherein
in a pore diameter distribution of the carbon sheet, a ratio of a volume of a second peak present in a region of a pore diameter of 0.5 um or more and 3 um or less to a volume of a first peak present in a region of 20 um or more and 100 um or less is 0.06 to 0.50.

2. The carbon sheet according to claim 1, wherein the carbon fiber structure is a carbon fiber paper material.

3. The carbon sheet according to claim 1 or 2, wherein the graphite particles have an aspect ratio of 5 or more.

4. The carbon sheet according to claim 1 or 2, wherein the graphite particles have an average particle size of 1 um or more and 20 um or less.

5. The carbon sheet according to claim 1 or 2, wherein the graphite particles are vein graphite or scale-like graphite.

6. The carbon sheet according to claim 1 or 2, wherein a mass of the graphite particles is 30 mass% or more and 50 mass% or less in a mass of the entire carbon sheet.

7. The carbon sheet according to claim 1 or 2, wherein a mass of the graphite particles is 100 parts by mass or more and 300 parts by mass or less with respect to 100 parts by mass of the binding agent.

8. The carbon sheet according to claim 1 or 2, having a conductive resistance in a through-plane direction of 0.5 mΩ·cm² or more and 4.5 mΩ·cm² or less when pressurized at 1.0 MPa.

9. The carbon sheet according to claim 1 or 2, having a thermal resistance in a through-plane direction of 0.5 K·cm²/W or more and 3.3 K·cm²/W or less when pressurized at 1.0 MPa.

10. A water repellent carbon sheet comprising the carbon sheet according to claim 1 and further comprising a water repellent material.

11. A gas diffusion electrode substrate comprising a microporous layer on one surface of the carbon sheet according to claim 1 or the water repellent carbon sheet according to claim 10.

12. A membrane electrode assembly comprising the carbon sheet according to claim 1 or 2, the water repellent carbon sheet according to claim 10, or the gas diffusion electrode substrate according to claim 11 as a gas diffusion electrode, wherein the gas diffusion electrode is bonded to at least one surface of a solid polymer electrolyte membrane provided with a catalyst layer on both surfaces.

13. A membrane electrode assembly comprising the carbon sheet according to claim 1 or 2, the water repellent carbon sheet according to claim 10, or the gas diffusion electrode substrate according to claim 11 as a cathode-side gas diffusion electrode; and a gas diffusion electrode having a higher thermal resistance than that of the cathode-side gas diffusion electrode on an anode side, wherein the gas diffusion electrode is bonded to a solid polymer electrolyte membrane provided with a catalyst layer on both surfaces.

14. A fuel cell comprising bipolar plates on both sides of the membrane electrode assembly according to claim 12.

15. A fuel cell comprising bipolar plates on both sides of the membrane electrode assembly according to claim 13.

16. Transportation equipment using the fuel cell according to claim 14 as a power source.

17. Transportation equipment using the fuel cell according to claim 15 as a power source.

18. A method for producing a carbon sheet to produce the carbon sheet according to claim 1 or 2, comprising impregnating a carbon fiber structure with a liquid composition containing a mixture of a thermosetting resin and a thermoplastic resin and the graphite particles.

19. The method for producing a carbon sheet according to claim 18, comprising heat-treating the carbon fiber structure impregnated with the liquid composition containing the mixture of the thermosetting resin and the thermoplastic resin in an inert atmosphere at 1,300°C or more and 3,000°C or less.
